# EUROPÄISCHE PATENTSCHRIFT

(11) **EP 3 863 111 B1**
(45) Veröffentlichungstag und Bekanntmachung des Hinweises auf die Patenterteilung: **04.11.2026**
(21) Anmeldenummer: 21155112.2
(22) Anmeldetag: 04.02.2021
(51) Int. Cl.: H01M 50/60, H01M 50/172, H01M 50/317, H01M 50/367, H01M 50/528, H01M 50/54, H01M 50/543, H01M 50/609, H01M 50/627, H01M 50/15, H01M 50/176

(54) **TRAKTIONSBATTERIE MIT AKKUMULATORZELLEN**
TRACTION BATTERY WITH ACCUMULATOR CELLS
BATTERIE DE TRACTION AVEC DES ÉLÉMENTS D'ACCUMULATEUR

(30) Priorität: 07.02.2020 DE 102020103144
(43) Veröffentlichungstag der Anmeldung: 11.08.2021
(73) Patentinhaber: HOPPECKE Batterien GmbH & Co. KG., 59929 Brilon (DE)
(72) Erfinder: Kesper, Heinrich, 34508 Willingen (DE)
(74) Vertreter: Brinkmann & Partner

(56) Entgegenhaltungen:
- EP-A1- 2 597 703
- EP-A1- 3 588 610
- EP-A2- 2 453 504
- DE-U1- 8 007 719
- US-A- 1 283 779
- US-A1- 2009 311 586
- US-A1- 2011 171 512
- US-A1- 2019 081 287
- US-A1- 2019 237 742
- US-B1- 6 258 481

## Beschreibung

Die Erfindung betrifft eine Traktionsbatterie mit einem Batteriegehäuse und einer Mehrzahl von darin in Reihen und Spalten angeordneten und miteinander elektrisch verschalteten Akkumulatorzellen, wobei eine Akkumulatorzelle ein Zellengehäuse und einen das Zellengehäuse fluiddicht verschließenden Zellendeckel aufweist, wobei das Batteriegehäuse standardisierte geometrische Abmessungen zur Aufnahme von HPzS-Akkumulatorzellen mit acht positiven Elektrodenplatten sowie neun negativen Elektrodenplatten aufweist, wobei innerhalb des Zellengehäuses einander abwechselnd positive und negative Elektrodenplatten sowie ein die Elektrodenplatten umgebender Elektrolyt angeordnet sind, wobei die positiven und die negativen Elektrodenplatten jeweils an einen gemeinsamen und durch eine Öffnung im Zellendeckel hindurchgeführten Pol elektrisch angeschlossen sind und wobei der Zellendeckel eine gasdurchlässig verschließbare Nachfüllöffnung für Elektrolyt aufweist.

Traktionsbatterien der vorbeschriebenen Art sind aus dem Stand der Technik an sich gut bekannt, weshalb es eines gesonderten druckschriftlichen Nachweises an dieser Stelle nicht bedarf.

Als nicht stationäre Batterien finden Traktionsbatterien typischerweise in der Fahrzeugtechnik Verwendung, beispielsweise als Energiequelle für elektrisch betriebene Arbeitsgeräte. Derlei Arbeitsgeräte können beispielsweise Gabelstapler, Hubwagen, Radlader, Bagger und/oder dgl. sein.

Vorbekannte Traktionsbatterien verfügen über eine Mehrzahl von miteinander elektrisch verschalteten Akkumulatorzellen, auch Batteriezellen genannt. Es kommen typischerweise je nach gewünschter Ausgangsspannung zwölf Zellen (für 24V), vierundzwanzig Zellen (für 48V) oder vierzig Zellen (für 80V) zum Einsatz. Dabei verfügt jede Zelle über ein Zellengehäuse, das seinerseits einen Elektrolyten sowie andererseits einander abwechselnd angeordnete positive und negative Elektrodenplatten aufnimmt.

Das Zellengehäuse einer Akkumulatorzelle besteht typischerweise aus Kunststoff und es ist oberseitig mittels eines Zellendeckels elektrolytdicht verschlossen, beispielsweise durch Verschweißen des Deckels mit dem Gehäuse.

Die positiven und negativen Elektrodenplatten sind jeweils an einen gemeinsamen und durch eine Öffnung im Zellendeckel hindurchgeführten Pol elektrisch angeschlossen. Die Pole sind so für den elektrischen Anschluss beispielsweise einer Polklemme von außen zugänglich.

Aus der EP 2 453 504 A2 ist ein Akkumulator mit einem Gehäuse und einem das Gehäuse fluiddicht verschließenden Gehäusedeckel bekannt, wobei innerhalb des Gehäuses abwechselnd positive und negative Elektroden sowie ein die Elektroden umgebender Elektrolyt angeordnet sind. Der Akkumulator zeichnet sich durch einen als Ausgleichsbehälter für den Elektrolyt dienenden Zusatzbehälter aus, wobei der vom Zusatzbehälter bereitgestellte Volumenraum einerseits und der vom Gehäuse bereitgestellte Volumenraum anderseits in strömungstechnischer Verbindung stehen.

Im bestimmungsgemäßen Betrieb einer Traktionsbatterie verlieren die einzelnen Akkumulatorzellen Elektrolyt. Ein solcher Elektrolytverlust tritt insbesondere während eines Beladevorgangs durch Entgasung auf. Es ist deshalb von Zeit zu Zeit Elektrolyt nachzufüllen, zu welchem Zweck der Gehäusedeckel über eine Nachfüllöffnung verfügt. In diese Nachfüllöffnung kann beispielsweise ein Klappdeckelstopfen eingesetzt sein, der bei geöffnetem Klappdeckel eine Elektrolytnachfüllung ermöglicht. Die Nachfüllöffnung ist verschließbar ausgebildet, beispielweise mittels des Klappdeckels eines in die Nachfüllöffnung eingesetzten Klappendeckelstutzens. Damit es insbesondere im Beladefall nicht zu einer ungewollten Überdruckausbildung innerhalb des Zellengehäuses infolge einer Elektrolytentgasung kommt, ist ein Verschluss der Nachfüllöffnung nicht gasdicht ausgebildet.

Aus der DE 80 07 719 U1 ist ein mehrzelliger Bleiakkumulator mit einem durch einen Blockdeckel abgeschlossenen Gehäuse bekannt, wobei in dem Blockdeckel durch einen Unter- und im Abstand dazu angeordneten Oberdeckel ein Hohlraum zur Säureabscheidung ausgebildet ist. Der Hohlraum ist entsprechend der Zellenanzahl in miteinander verbundene Kammern unterteilt. Die Kammern sind jeweils über eine an ihrem tiefsten Punkt angeordnete Öffnung an die zugehörige Zelle angeschlossen, wobei der Hohlraum entlüftet ist.

Des Weiteren ist aus der US 2019/0237742 A1 ein Stromspeicher mit einem Gehäuse sowie einer Elektrodenbaugruppe bekannt. Die Elektrodenbaugruppe ist an dem Gehäuse angeordnet und weist eine erste, sowie eine zweite Elektrodenplatte auf, wobei zwischen den Elektrodenplatten ein Trennelement angeordnet ist. Der Stromspeicher weist zudem einen Deckel auf, der das Gehäuse abdeckt, sowie Elektrodenanschlüsse, die mit der Elektrodenbaugruppe verbunden sind und aus dem Deckel hervorstehen. Zudem weist der Deckel eine Öffnung auf, die zum Befüllen des Gehäuses mit Elektrolyt vorgesehen ist, wobei die Öffnung ein rohrförmiges Element aufweist, welches durch ein Abdeckelement den Austritt von Elektrolyt verhindert.

Aus der EP 3 588 610 A1 ist eine Traktionsbatterie mit einer Mehrzahl von in Reihen und Spalten angeordneten Akkumulatorzellen bekannt.

Traktionsbatterien der vorbeschriebenen Art haben sich im alltäglichen Praxiseinsatz bewährt. Es besteht gleichwohl Verbesserungsbedarf, um insbesondere den Anwendungsbereich erweitern zu können, weshalb es die **Aufgabe** der Erfindung ist, eine neuartige Traktionsbatterie bereitzustellen, die konstruktiv einen erweiterten Anwendungsbereich, insbesondere eine verbesserte Hochstromeignung ermöglicht.

Zur **Lösung** dieser Aufgabe wird mit der Erfindung vorgeschlagen eine Traktionsbatterie nach Anspruch 1. Die erfindungsgemäße Traktionsbatterie zeichnet sich dadurch aus, dass vier Pole vorgesehen sind, wobei die negativen und die positiven Elektrodenplatten jeweils an zwei Pole angeschlossen sind, dass die Pole jeweils eine Einlage aus Kupfer und/oder einer Kupferlegierung aufweisen und dass die Pole jeweils eine Erstreckung in Höhenrichtung von weniger als 80 mm aufweisen, wobei der Zellendeckel auf seiner dem Gehäuse zugewandten Innenseite einen die Nachfüllöffnung ringförmig umgebenden Stutzen mit einer umlaufenden Wandung aufweist, die über eine Mehrzahl von in Umfangsrichtung gleichverteilten Durchtrittsschlitzen verfügt, wobei die Akkumulatorzellen HPzS-Akkumulatorzellen mit sieben positiven Elektrodenplatten oder weniger sowie acht negativen Elektrodenplatten oder weniger vorgesehen sind, wobei die Akkumulatorzellen unter Belassung eines Spaltraums beabstandet zueinander angeordnet sind.

Die voraufgeführten Merkmale bringen in ihrer Kombination den synergetischen Effekt eines deutlich verringerten Innenwiderstands mit der Folge einer verbesserten Hochstromeignung. Erfindungsgemäße Traktionsbatterien können damit ohne signifikante Einbußen hinsichtlich der Lebensdauer auch für Hochstromanwendungen eingesetzt werden, womit sich ein erweiterter Anwendungsbereich ergibt. Insbesondere lassen sich erfindungsgemäße Traktionsbatterienverstärkt auf dem technischen Gebiet der Elektromobilität verwenden.

"Hochstromanwendung" im Sinne der Erfindung meint die Aufnahme und/oder Abgabe hoher Ströme innerhalb kurzer Zeitspannen, seit es im Entladefall durch den Betrieb von beispielsweise Drehstrommotoren oder im Beladefall durch den Einsatz von zum Beispiel modernen Lademanagementsystemen und/oder Energierückgewinnungseinrichtungen.

Die Aufnahme und/oder die Abgabe hoher Ströme führt mit zunehmender Größe der einzelnen Akkumulatorzellen zu stärker ins Gewicht fallenden und nicht mehr vermeidbaren unerwünschten Nebeneffekten, wie zum Beispiel der Wärmeentwicklung aufgrund des mit steigender Zellengröße anwachsenden Innenwiderstands. In nachteiliger Weise führt dies im Verwendungsfall zu einer verkürzten Lebensdauer sowie zu kürzeren Entladezyklen. Damit sind aus dem Stand der Technik vorbekannte Traktionsbatterien ab einer bestimmten Baugröße für die Hochstromanwendung nicht oder nur bedingt geeignet, was insbesondere für Traktionsbatterien der Baugröße gilt, die im Markt wegen der gewünschten hohen Kapazität gefordert werden. Es stehen somit die einander widerstreitenden Anforderungen gegenüber, eine Traktionsbatterie zu schaffen, die bei gleichzeitiger Langlebigkeit entweder eine hohe Kapazität bereitstellt oder für Hochstromanwendungen geeignet ist. Gattungsgemäße Batterien werden dieser Anforderung dem Grunde nach nicht gerecht.

Mit der erfindungsgemäßen Ausgestaltung werden konstruktive Einzelmaßnahmen miteinander kombiniert, wobei sich infolge dieser Kombination in synergetischer Weise ein soweit verringerter Innenwiderstand der Akkumulatorzelle ergibt, dass die unerwünschte Wärmeentwicklung insbesondere während einer Beladung soweit reduziert ist, dass eine verbesserte Hochstromanwendung bei gleichzeitiger Langlebigkeit gegeben ist.

Im Bereich insbesondere der Elektromobilität finden insbesondere Lithiumionenakkumulatoren Verwendung. Dies deshalb, weil derartige Akkumulatoren hochstromfähig sind. Es ist insbesondere in kürzester Zeit eine hohe Stromaufnahme ermöglicht, was kurze Beladezeiten erbringt. Von Nachteil derartiger Akkumulatoren ist aber insbesondere die Rohstoffzusammensetzung. So wird insbesondere Kobalt benötigt, dessen Beschaffung Schwierigkeiten bereiten kann. Zudem sind Lithiumionenakkumulatoren im Havariefall äußerst gefährlich, da sie explosionsartig bersten und auch unter Sauerstoffabbindung nicht gelöscht werden können, da sie im Brand- und/oder Explosionsfall reaktionsbedingt Sauerstoff freisetzen.

Es besteht insoweit ein Interesse daran, Traktionsbatterien beispielsweise auf Bleisäurebasis bereitzustellen, die zumindest hinsichtlich mancher Anwendungen Lithiumionenakkumulatoren ersetzen können. Voraussetzung hierfür aber ist die bessere Hochstromfähigkeit, was mit der erfindungsgemäßen Ausgestaltung erreicht ist.

Gemäß einer ersten Maßnahme wird mit der Erfindung die Verwendung von vier Polen vorgeschlagen. Dabei sind sowohl die positiven Elektrodenplatten als auch die negativen Elektrodenplatten jeweils an zwei Pole elektrisch angeschlossen. Der Einsatz von insgesamt vier Polen gestattet es, den Querschnitt der Pole im Vergleich zu einer Zwei-Pol-Ausgestaltung reduzieren zu können. Dies bedingt einen verringerten Innenwiderstand je Pol, womit die Wärmeentwicklung im Lade- und/oder Beladefall verringert ist.

Gemäß einer zweiten Maßnahme wird in Kombination mit der ersten Maßnahme vorgeschlagen, dass die Pole jeweils eine Einlage aus Kupfer und/oder einer Kupferlegierung aufweisen.

Bei Kupfer bzw. einer Kupferlegierung handelt es sich um einen hochleitfähigen Werkstoff. Im Ergebnis ergeben sich Pole mit verbesserter elektrischer Leitfähigkeit, was den spezifischen elektrischen Widerstand im Vergleich zu Polen aus einer herkömmlichen Bleilegierung verringert. Auch durch diese Maßnahme wird die Wärmeentstehung insbesondere bei einem Be- und/oder Entladen reduziert.

Gemäß einer dritten Maßnahme wird in Kombination mit den beiden voraufgeführten Maßnahmen vorgeschlagen, dass die Pole jeweils eine Erstreckung in Höhenrichtung von weniger als 80 mm aufweisen. Es wird mithin im Vergleich zu vorbekannten Bauformen eine Verkürzung der Pole in Höhenrichtung vorgeschlagen, wobei es bevorzugt ist, dass die Pole eine Erstreckung von weniger als 80 mm aufweisen. Durch diese Polverkürzung wird gleichfalls eine Verringerung des Innenwiderstandes erreicht, so dass die Wärmeentstehung im Be- und/oder Entladefall noch weiter verringert ist.

Die vorstehend vorgeschlagenen Maßnahmen sind insbesondere in ihrer Kombination nicht unproblematisch, da sie mit Nachteilen einhergehen. Diese Nachteile werden aber bewusst in Kauf genommen, um eine verbesserte Hochstromeignung zu erzielen und auf Blei-Säure-Basis zu Lithiumionenakkumulatoren alternativ ausgebildete Akkumulatoren vorschlagen zu können.

So bringt die Verwendung von vier Polen den Nachteil eines erhöhten Verschaltungsaufwandes mit sich. Es müssen zur elektrischen Kontaktierung nicht nur zwei, sondern vier Polklemmen eingesetzt werden. Dieser Nachteil kann aber herstellerseitig durch eine entsprechende Verschaltung der Akkumulatorzellen zu einer Traktionsbatterie überwunden werden, so dass er verwenderseitig nicht zum Tragen kommt.

Die jeweilige Verwendung von Poleinlagen macht die Herstellung aufwendiger und teurer. Auch dieser Nachteil kann herstellungsseitig überwunden werden, womit er sich nicht auf einen späteren Verwender durchschlägt.

Die Maßnahme der längenverkürzten Pole ist nicht so ohne Weiteres zu überwinden. Denn die Polverkürzung wird dadurch erkauft, dass der freie Volumenraum zwischen Elektrolytspiegel und Innenoberfläche des Deckels verringert ist. Damit kann vom Zellengehäuse weniger an Elektrolyt aufgenommen werden. Dies führt zwangsläufig zu verkürzten Wartungsintervallen, womit ein späterer Nutzer häufiger den Elektrolytstand zu kontrollieren und im Bedarfsfall nachzufüllen hat.

Um diesem Nachteil zumindest zum Teil begegnen zu können, wird mit der Erfindung in Kombination mit den schon vorstehend erläuterten Maßnahmen ferner vorgeschlagen, dass der Zellendeckel auf seiner dem Gehäuse zugewandten Innenseite einen die Nachfüllöffnung ringförmig umgebenden Stutzen mit einer umlaufenden Wandung aufweist, die über eine Mehrzahl von in Umgebungsrichtung gleichverteilten Durchtrittsschlitzen verfügt.

Die Nachfüllöffnung ist aus den schon eingangs erläuterten Gründen nicht fluiddicht verschließbar. Dies bedeutet, dass selbst im bestimmungsgemäßen Verwendungsfall ungewollt Elektrolyt austreten kann. Um dies zu verhindern, ist bei vorbekannten Traktionsbatterien vorgesehen, dass der Zellendeckel einen gewissen Abstand zum Elektrolytspiegel bei maximalem Elektrolytstand aufweist. Diese Beabstandung soll dafür Sorge tragen, dass auch im Falle von durch beispielsweise Fahrbewegungen verursachten Schwappeffekten kein Elektrolyt über die Nachfüllöffnung austreten kann. Dieser zur Vermeidung von Elektrolytaustritt vorzusehende Abstand zwischen Innenseite des Zellendeckels und Elektrolytspiegel bedingt bei aus dem Stand der Technik vorbekannten Traktionsbatterien Pole mit einer Polerstreckung in Höhenrichtung von über 80 mm. Da gemäß der erfindungsgemäßen Ausgestaltung Pole mit einer Erstreckung in Höhenrichtung von weniger als 80 mm vorgesehen sind, ergibt sich entweder eine Reduzierung der maximalen Füllstandshöhe für den Elektrolyten, was die Wartungsintervalle erhöht, oder die Gefahr von ungewolltem Elektrolytaustritt insbesondere infolge von Schwappeffekten.

Die erfindungsgemäße Ausgestaltung schafft hier nun zumindest ein Stück weit Abhilfe, da der Zellendeckel hinsichtlich der Nachfüllöffnung mit einer Labyrinthführung ausgestattet ist. Diese Labyrinthführung ist durch einen Stutzen gegeben, der die Nachfüllöffnung ringförmig umgibt. Der Stutzen ist mit einer umlaufenden Wandung ausgerüstet, die über eine Mehrzahl von in Umfangsrichtung gleichverteilten Durchtrittsschlitzen verfügt. Durch diese Durchtrittsschlitze kann im Entgasungsfall Gas über die Nachfüllöffnung entweichen, so dass es insbesondere im Bestromfall nicht zu einer ungewollten Überdruckausbildung im Akkumulatorgehäuse kommt.

Der geschlitzt ausgebildete Stutzen stellt aber zugleich sicher, dass etwaige sich durch Schwappeffekte einstellende Wellen auf der Oberfläche des Elektrolytspiegels gebrochen und ein ungehinderter Eintrag von Elektrolyt in die Nachfüllöffnung unterbunden ist. Dies gestattet es, den herkömmlichen Abstand zwischen maximalem Elektrolytspiegel und Innenoberfläche des Gehäusedeckels zu verringern, ohne dass die Gefahr eines ungewollten Elektrolytaustritts infolge von Schwappeffekten besteht. In der Kombination ist die anspruchsgemäße Verkürzung der Pole ermöglicht.

Im Ergebnis erbringen die erfindungsgemäßen Maßnahmen in ihrer Kombination den synergetischen Effekt, dass der elektrische Innenwiderstand mit dem Vorteil einer verringerten Wärmeerzeugung im Betriebsfall reduziert ist, und dies bei gleichzeitiger Sicherstellung, dass die mit diesen Maßnahmen einhergehenden Nachteile keinen nutzerseitigen Niederschlag finden.

Gemäß einem weiteren Merkmal der Erfindung ist vorgesehen, dass die Pole jeweils eine Erstreckung in Höhenrichtung von weniger als 70 mm, vorzugsweise von weniger als 65 mm, noch mehr bevorzugt von weniger als 60 mm und am meisten bevorzugt von weniger als 55 mm aufweisen.

Je kürzer die Erstreckung der Pole in Höhenrichtung ausfällt, desto geringer fällt der Innenwiderstand der Pole aus und desto geringer ist die Wärmeentwicklung im Entlade- bzw. Beladefall. Insofern ist es angestrebt, die Längserstreckung der Pole möglichst kurz auszugestalten. Je kürzer allerdings die Polerstreckung ist, desto kleiner fällt der freie Volumenraum oberhalb des Elektrolytspiegels bei Mindestbefüllung bis zur Unterseite des Zellendeckels aus. Dies führt in schon vorbeschriebener Weise dazu, dass es bei auftretendem Elektrolytschwappen zu einem ungewollten Elektrolytaustritt durch die Nachfüllöffnung kommen kann. Die durch die Stutzenausbildung gegebene Labyrinthführung vermindert diese Gefahr, doch darf der freie Volumenraum unterhalb des Zellendeckels nicht zu gering ausfallen. Es ist deshalb bevorzugt, dass die Erstreckung der Pole in Höhenrichtung nicht weniger als 50 mm beträgt.

Es ist gemäß einem weiteren Merkmal der Erfindung vorgesehen, dass der erste Stutzen von einem zweiten Stutzen unter Belassung eines radialen Abstandes umgeben ist, wobei der zweite Stutzen eine umlaufende Wandung mit einer Mehrzahl von in Umfangsrichtung gleichverteilten Durchtrittsschlitzen aufweist. Gemäß dieser Weiterbildung ist nicht nur ein Stutzen vorgesehen, sondern es sind zwei Stutzen gegeben, die konzentrisch angeordnet sind. Es ist so eine verfeinerte Labyrinthführung gegeben, die einen zusätzlichen Schwappschutz bietet und dafür Sorge trägt, dass ein zusätzlicher Schutz vor einem ungewollten Elektrolytaustritt gegeben ist.

Gemäß einem weiteren Merkmal der Erfindung ist vorgesehen, dass sich das Ausbildungsmuster der Durchtrittsschlitze von dem ersten und dem zweiten Stutzen unterscheidet.

Bevorzugterweise sind die Durchtrittsschlitze von ersten und zweitem Stutzen in Umfangsrichtung versetzt zueinander angeordnet. Ein direkter Durchtritt von Elektrolyt durch die von den Stutzen bereitgestellten Durchtrittsschlitzen ist damit verhindert, was einen zusätzlichen Schutz vor einem ungewollten Elektrolytaustritt bietet.

Gemäß einem weiteren Merkmal der Erfindung ist ein dritter Stutzen vorgesehen, der den zweiten Stutzen unter Belassung eines radialen Abstandes umgibt, wobei der dritte Stutzen eine umlaufende Wandung mit einer Mehrzahl von in Umfangsrichtung gleichverteilten Durchtrittsschlitzen aufweist. Diese Ausgestaltung führt zu einer noch weiter verbesserten Austrittsbarriere für den Elektrolyten.

Es ist gemäß einem weiteren Merkmal der Erfindung vorgesehen, dass sich das Ausbildungsmuster der Durchtrittsschlitze von dem dritten und dem zweiten Stutzen unterscheidet. Bevorzugterweise weisen der dritte und der erste Stutzen ein gleiches Ausbildungsmuster auf, was sich von dem Ausbildungsmuster des zweiten Stutzens unterscheidet. Bevorzugt ist es indes, wenn die Durchtrittsschlitze des zweiten Stutzens jeweils um die Hälfte versetzt zu den Durchtrittsschlitzen von dem ersten und dem dritten Stutzen angeordnet sind. Hierdurch ist eine maximale Wegstrecke für den Elektrolyten gegeben, um aus dem Zellengehäuse durch die Nachfüllöffnung austreten zu können. Insoweit ist ein optimierter Austrittsschutz gegeben.

Die Durchtrittsschlitze erstrecken sich in axialer Richtung, womit jeder Stutzen zungenartige Fortsätze aufweist, die jeweils unter Belassung eines Durchtrittsschlitzes benachbart zueinander in Umfangsrichtung angeordnet sind.

Gemäß einem weiteren Merkmal der Erfindung ist vorgesehen, dass die Poleinlage über 50 %, vorzugsweise über 60 %, noch mehr bevorzugt über 70 % der Polquerschnittsfläche einnimmt.

Der Pol ist aus einer Bleilegierung gebildet. Zur Verringerung des Innenwiderstandes verfügt der Pol in schon vorbeschriebener Weise über eine Poleinlage aus einem hochleitfähigen Werkstoff, bei dem es sich um Kupfer oder eine Kupferlegierung handelt. Um eine möglichst weitreichende Innenwiderstandsreduzierung zu erhalten ist es bevorzugt, einen wesentlichen Teil des Pols bezogen auf seine Querschnittsfläche aus dem hochleitfähigen Werkstoff auszubilden. Insofern ist es bevorzugt, dass die Poleinlage über 50% der Polquerschnittsfläche einnimmt.

Gemäß einem weiteren Merkmal der Erfindung ist vorgesehen, dass sieben positive Elektrodenplatten oder weniger vorgesehen sind. Hiermit einhergehend ist gemäß einem weiteren Merkmal der Erfindung vorgesehen, dass acht negative Elektrodenplatten oder weniger vorgesehen sind.

Die nach dem Stand der Technik beispielsweise zum Einsatz kommenden Akkumulatorzellen sind sogenannte acht HPzS-Zellen. Diese Zellen verfügen über acht positive Elektrodenplatten und neun negative Elektrodenplatten. Es wird nun vorgeschlagen, in Abkehr zum Stand der Technik ein Plattenpaar weniger je Akkumulatorzelle vorzusehen, so dass im Unterschied zum Stand der Technik sieben HPzS-Batteriezellen zum Einsatz kommen, mithin Batteriezellen, die nur über sieben positive und acht negative Elektrodenplatten verfügen. Es kann auch eine noch weitere Reduzierung der Elektrodenplatten vorgesehen sein, beispielsweise sechs HPzS-Batteriezellen, die dann über sechs positive und sieben negative Elektrodenplatten verfügen. Bevorzugt sind indes aber sieben HPzS-Batteriezellen.

Bei sieben HPzS-Batteriezellen werden in Breitenrichtung der Akkumulatorzelle je Akkumulatorzelle zwei Elektrodenplatten, d.h. en Elektrodenplattenpaar eingespart. Eine sieben HPzS-Batteriezelle baut damit in Breitenrichtung weniger auf als vorbekannte acht HPzS-Zellen. Dies erbringt den nachfolgend erläuterten Vorteil.

Eine Traktionsbatterie verfügt typischerweise über ein Batteriegehäuse und über eine Mehrzahl von darin in Reihen und Spalten angeordneten und miteinander elektrisch verschalteten Akkumulatorzellen. Dabei stehen die Akkumulatorzellen dicht an dicht und füllen das Batteriegehäuse vollends aus.

Das Batteriegehäuse gattungsgemäßer Traktionsbatterien ist hinsichtlich seiner geometrischen Abmessungen standardisiert. Dies deshalb, damit sichergestellt ist, dass das die Akkumulatorzellen aufnehmende Batteriegehäuse in dafür vorgesehene Aufnahmeräume von mit einer Traktionsbatterie zu betreibenden Einrichtungen, wie insbesondere Fahrzeugen bestimmungsgemäß hineinpasst. Nur wenn das Batteriegehäuse die standardisierten Abmessungen aufweist, ist überhaupt sichergestellt, dass die Traktionsbatterie in bestimmungsgemäßer Weise Verwendung finden kann.

Wenn nun die Akkumulatorzellen in vorbeschriebener Weise ein Elektrodenplattenpaar weniger aufweisen und damit in Breitenrichtung weniger stark aufbauen, wird bei gleichbleibenden Außenabmessungen des Batteriegehäuses einer Traktionsbatterie ein Freiraum innerhalb des Batteriegehäuses geschaffen, der es ermöglicht, die Akkumulatorzellen reihen- oder spaltenweise unter Belassung eines Spaltraums beabstandet zueinander anzuordnen. In Abkehr zum Stand der Technik wird damit die Möglichkeit geschaffen, Akkumulatorzellen nicht dicht an dicht, sondern unter Belassung eines Spaltraums beabstandet zueinander in einem Batteriegehäuse anzuordnen. Diese Ausgestaltung ermöglicht es, die in einem Batteriegehäuse angeordneten Akkumulatorzellen zu kühlen, indem durch die Spalträume zwischen den Akkumulatorzellen ein Kühlmittel geführt wird, sei es durch natürliche oder durch erzwungene Konvektion.

Die Belassung von Spalträumen zwischen Akkumulatorzellen schafft die Möglichkeit, die im bestimmungsgemäßen Betrieb einer Traktionsbatterie entstehende Wärme besser abführen zu können, sei es durch natürliche oder durch erzwungene Konvektion. So kann es insbesondere vorgesehen sein, eine Zwangsbelüftung mittels eines Ventilators vorzusehen, der im bestimmungsgemäßen Betriebsfall vorzugsweise Luft als Kühlmedium durch die Spalträume zwischen den Akkumulatorzellen hindurchführt. Hierdurch kann eine Abkühlung der Akkumulatorzellen erreicht werden.

Gemäß einer ersten Alternative der Erfindung ist vorgesehen, dass eine Zwangsbeaufschlagung mit Kühlmedium insbesondere während einer Beladung der Traktionsbatterie stattfindet. Alternativ hierzu kann vorgesehen sein, eine Zwangsbelüftung auch während eines bestimmungsgemäßen Betriebs der Traktionsbatterie vorzunehmen. In diesem Fall ist die Traktionsbatterie bevorzugterweise mit entsprechenden Einrichtungen wie zum Beispiel Ventilatoren auszurüsten. Es kann aber auch nur eine Naturkonvektion während des bestimmungsgemäßen Betriebs und eine Zwangsbeaufschlagung mit Kühlmedium während einer Beladung vorgesehen sein.

Die Reduzierung der Plattenpaare je Akkumulatorzelle geht mit einer Verringerung der Kapazität der Traktionsbatterie einher. Dies wiederum erbringt, dass sich die Stromentladung, mithin letztendlich die Entnahmezeit verringert. Dieser Nachteil wird aber bewusst in Kauf genommen, da es bei der praktischen Anwendung nicht nur auf die Entladezeit, sondern auch auf den sich aus Entladezeit und Beladezeit zusammensetzenden Gesamtzyklus ankommt. Da die vorgesehenen Spalträume insbesondere im Nachgang einer Beladung eine deutliche schnellere Abkühlung der Traktionsbatterie gestatten, ergibt sich bei einer Gesamtbetrachtung, dass der Gesamtzyklus insgesamt optimiert und zugunsten des Nutzers deutlich effektiver gestaltet ist. So zeigt sich in der Praxis, dass die Verringerung der Elektrodenplattenzahl dazu führt, dass sich die Entladezeit im durchschnittlichen Mittel um 15 Minuten verkürzt, die Abkühlzeit nach erfolgter Beladung sich indes aber um ca. 11 Stunden verkürzt, womit sich bei einer Betrachtung des Gesamtzyklus zugunsten des Nutzers eine Ersparnis von mehr als 10 Stunden ergibt. Dies erbringt wesentlich verringerte Umrüstzeiten, was auch den Vorteil mit sich bringt, dass weniger redundante Einrichtungen vorzuhalten sind.

Die Temperaturentwicklung im Stromentnahmefall ergibt sich insbesondere in Abhängigkeit des elektrischen Innenwiderstands der Traktionsbatterie. Dieser ist in schon vorbeschriebener Weise deutlich reduziert, womit eine verringerte Temperaturentwicklung im Stromentnahmefall erreicht ist. Hiermit einhergehend ist die verringerte Kapazität durch die verringerte Anzahl an Elektrodenplatten zumindest zum Teil ausgeglichen, so dass sich in Kombination von verringertem Innendwiderstand und geschaffenen Spalträumen zur Kühlmittelhindurchführung der zusätzliche synergetische Effekt einstellt, dass bei einer gleichzeitigen Verringerung der Wärmeentstehung während des bestimmungsgemäßen Betriebsfalls auch eine Abkühlmöglichkeit geschaffen ist, was einen insgesamt optimierten Gesamtzyklus erbringt und die durch die Elektrodenplattenpaarreduzierung bedingte Kapazitätsabsenkung zumindest zum Teil wieder aufwiegt.

Gemäß einem weiteren Merkmal der Erfindung ist vorgesehen, dass die elektrischen Verbindungen zwischen den Elektrodenpaarplatten und den jeweils zugehörigen Polen aus einem hochleitfähigen Werkstoff gebildet ist oder Bereich mit Einlagen aus einem hochleitfähigen Werkstoff aufweist. Auch durch diese Maßnahme wird eine zusätzliche Reduzierung der Wärmeentstehung im bestimmungsgemäßen Betriebsfall erreicht, weil der Innenwiderstand der elektrischen Verbindungen zwischen den Elektrodenpaarplatten und den jeweils zugehörigen Polen reduziert ist. Als hochleitfähiger Werkstoff kommt insbesondere Kupfer und/oder eine Kupferlegierung zum Einsatz. Aber auch andere hochleitfähige Werkstoffe sind denkbar, wie zum Beispiel Silber, Aluminium und/oder deren Legierungen.

Gemäß einem weiteren Merkmal der Erfindung ist vorgesehen, dass das Batteriegehäuse einen Boden aufweist, wobei zwischen den vom Batteriegehäuse aufgenommenen Akkumulatorzellen und dem Boden ein die zwischen den Akkumulatorzellen ausgebildeten Spalträume strömungstechnisch miteinander verbindender Verteilraum vorgesehen ist.

Es sind demnach keine strömungstechnisch voneinander separierten Spalträume zwischen den Akkumulatorzellen vorgesehen, sondern vielmehr Spalträume, die in strömungstechnischer Verbindung miteinander stehen, und zwar mittels eines Verteilraums, der unterhalb der Akkumulatorzellen verläuft. Es stellt sich insofern in Kombination mit der Polverkürzung in Höhenrichtung ein synergetischer Effekt ein. Denn einerseits wird durch die schon vorbeschriebene Polverkürzung der Vorteil einer Verminderung des Innenwiderstands erreicht. Zum anderen gestattet es die Polverkürzung. nach der Erfindung ausgebildete Akkumulatorzellen innerhalb eines in seinen geometrischen Abmessungen dem Standard entsprechenden Batteriegehäuse anzuordnen, und dies aufgrund des verminderten Platzbedarfs der Akkumulatorzellen unter Ausbildung eines Verteilraums. Dieser Verteilraum ist zwischen Batteriegehäuseboden und Unterseite der Akkumulatorzellen ausgebildet und verbindet die zwischen den Akkumulatorzellen jeweils ausgebildeten Spalträume miteinander. Es ist so in vorteilhafter Weise im bestimmungsgemäßen Betriebsfall ein Luftumspülen der Akkumulatorzellen möglich, was einen deutlich erhöhten Kühleffekt in vorteilhafter Weise zur Folge hat.

Zur beabstandeten Anordnung der Akkumulatorzellen zum Batteriegehäuseboden unter Ausbildung des Verteilraums können innerhalb des Batteriegehäuses Stützstege, Abstandshalter, Tragabschnitte und/oder dergleichen vorgesehen sein. Entscheidend ist, dass die Akkumulatorzellen oberseitig des dem Standard entsprechenden Batteriegehäuse abschließen und nicht über dieses hinaus vorstehen, gleichzeitig aber aufgrund der Polverkürzung der dadurch entstehende Freiraum genutzt ist, in vorbeschriebener Weise einen Verteilraum bereitzustellen, der die zwischen den Akkumulatorzellen ausgebildeten Spalträume strömungstechnisch miteinander verbindet.

Gemäß einem weiteren Merkmal der Erfindung wird vorgeschlagen, dass die Spalträume strömungstechnisch an ein System zur Erzeugung eines Kühlmittelstroms angeschlossen sind. Dieses System kann traktionsbatterieseitig, alternativ aber auch stationär ausgebildet sein. Bei einer traktionsbatterieseitigen Ausführung eines Kühlsystems kann in vorteilhafter Weise eine stetige Kühlung der Akkumulatorzellen stattfinden. Alternativ zu dieser Ausgestaltung ist ein stationäres Kühlsystem. In diesem Fall findet eine aktive Beaufschlagung der Spalträume zwischen den Akkumulatorzellen mit einem Kühlmittel nur im Beladefall statt. Während einer Stromentnahme, wenn sich also die Traktionsbatterie in der bestimmungsgemäßen Verwendung befindet, erfolgt eine Kühlung der Akkumulatorzellen durch ausschließlich natürliche Konvektion.

Das System zur Kühlung umfasst bevorzugterweise Ventilatoren, wobei in diesem Fall als Kühlmittel Umgebungsluft dient, das von den Ventilatoren angesogen durch die Spalträume zwischen den Akkumulatorzellen geführt wird.

Weitere Merkmale und Vorteile der Erfindung ergeben sich aus der nachfolgenden Beschreibung anhand der Figuren. Dabei zeigen
- Fig. 1: in schematisch perspektivischer Darstellung eine Akkumulatorzelle einer erfindungsgemäßen Traktionsbatterie;
- Fig. 2: in schematischer Rückansicht einen Zellendeckel einer Akkumulatorzelle einer erfindungsgemäßen Traktionsbatterie und
- Fig. 3: in schematischer Perspektivansicht ausschnittsweise den oberen Teil einer Akkumulatorzelle ohne Zellengehäuse einer erfindungsgemäßen Traktionsbatterie.

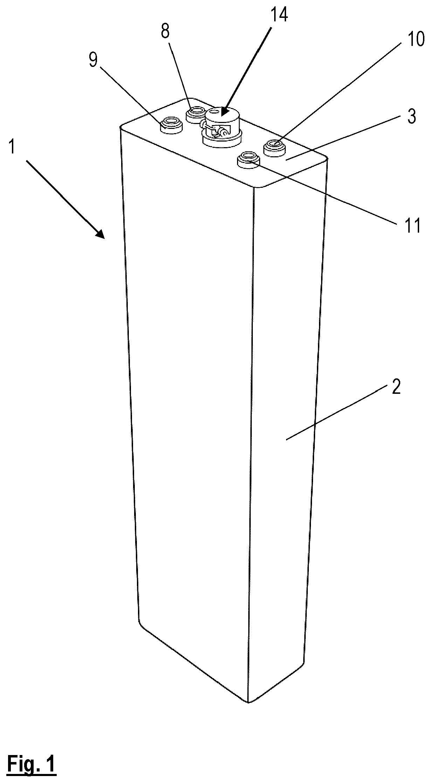

Fig. 1 lässt in schematisch perspektivischer Ansicht eine Akkumulatorzelle 1 einer erfindungsgemäßen Traktionsbatterie erkennen.

Die Akkumulatorzelle 1 verfügt über ein Zellengehäuse 2 und einen Zellendeckel 3, der das Zellengehäuse 2 im endmontierten Zustand fluiddicht verschließt.

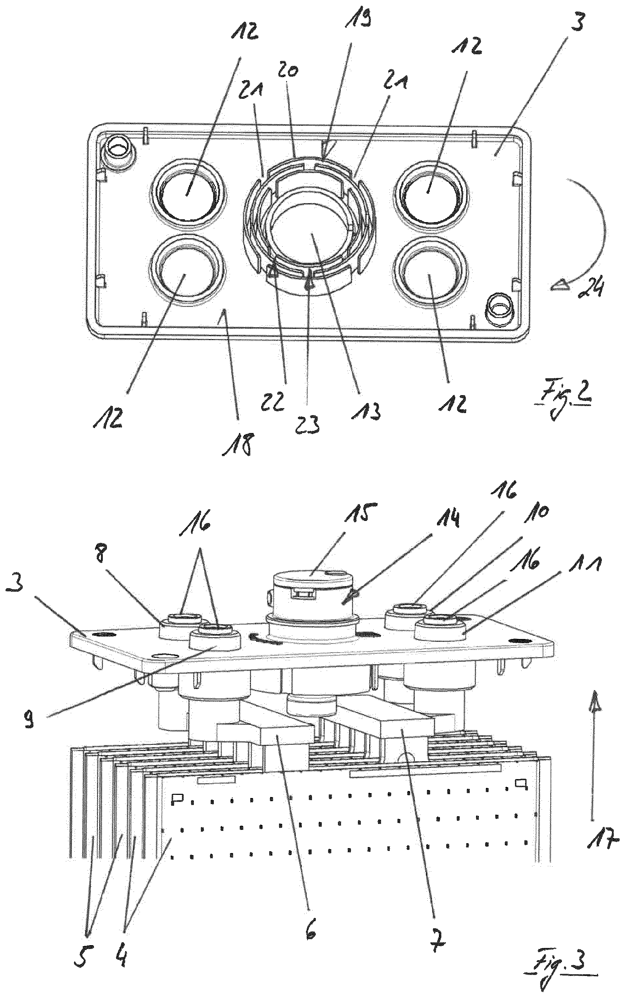

Innerhalb des Zellengehäuses 2 sind einander abwechselnd positive und negative Elektrodenplatten 4 und 5 angeordnet, wie sich dies insbesondere aus der Ausschnittsdarstellung nach Fig. 3 ergibt. Innerhalb des Zellengehäuses 2 ist des Weiteren ein in den Figuren nicht näher dargestellter Elektrolyt angeordnet, der im endmontierten Zustand der Akkumulatorzelle 1 die Elektrodenplatten 4 und 5 umgibt

Wie Fig. 3 ferner erkennen lässt, sind die negativen Elektrodenplatten 4 einerseits sowie die positiven Elektrodenplatten 5 andererseits jeweils miteinander elektrisch kontaktiert, zu welchem Zweck Polbrücken vorgesehen sind, und zwar bezüglich der negativen Elektrodenplatten 4 die Polbrücke 6 und bezüglich der positiven Elektrodenplatten 5 die Polbrücke 7.

Mittels der jeweiligen Polbrücken 6 bzw. 7 sind die negativen Elektrodenplatten 4 einerseits und die positiven Elektrodenplatten 5 andererseits jeweils an durch Öffnungen 12 des Zellendeckels 3 hindurchgeführte Pole 8, 9, 10 und 11 elektrisch angeschlossen. Es sind mithin insgesamt 4 Pole vorgesehen, wobei die negativen und die positiven Elektrodenplatten 4 und 5 jeweils an zwei Pole angeschlossen sind, nämlich die negativen Elektrodenplatten 4 an die Pole 8 und 9 und die positiven Elektrodenplatten an die Pole 10 und 11. Auch dieser Sachzusammenhang ergibt sich insbesondere aus der Darstellung nach Fig. 3.

Die Pole 8, 9, 10 und 11 verfügen jeweils über eine Einlage 16 aus Kupfer und/oder einer Kupferlegierung. Hierdurch wird in vorteilhafter Weise ein gegenüber einer Polausführung ohne Einlage verminderter Innenwiderstand erreicht.

Erfindungsgemäß ist des Weiteren vorgesehen, dass die Pole 8, 9, 10 und 11 jeweils eine Erstreckung in Höhenrichtung 17 aufweisen, die kleiner als 80 mm ist. Noch mehr bevorzugt sind Pole 8, 9, 10 und 11, die jeweils eine Erstreckung in Höhenrichtung 17 von weniger als 70 mm oder noch weniger aufweisen. Auch diese konstruktive Maßnahme sorgt für eine Verminderung des Innenwiderstands.

Da im bestimmungsgemäßen Betrieb der Akkumulatorzelle 1 Elektrolyt verbraucht wird, ist eine Elektrolytnachfüllung von Zeit zu Zeit erforderlich. Der Zellendeckel 3 verfügt zu diesem Zweck über eine Nachfüllöffnung 13. Dies ist mit einem eine Klappe 15 tragenden Einsatz 14 verschlossen, allerdings nicht fluid- und/oder gasdicht, damit unerwünschte Überdruckausbildungen im Zellengehäuse 2 insbesondere während eines Wiederaufladevorgangs vermieden sind. Die Klappe 15 ist vom Einsatz 14 verschwenkbar bereitgestellt, was es im Bedarfsfall gestattet, die Nachfüllöffnung 13 durch Verschwenken der Klappe 15 zu öffnen.

Um zu vermeiden, dass es infolge von Schwappbewegungen des Elektrolyts zu einem ungewollten Elektrolytaustritt durch die Nachfüllöffnung 13 hindurchkommt, ist erfindungsgemäß des Weiteren vorgesehen, dass der Zellendeckel 3 auf seiner dem Gehäuse 2 zugewandten Innenseite 18 einen die Nachfüllöffnung 13 ringförmig umgebenden Stutzen 19 aufweist. Dieser Stutzen 19 verfügt über eine umlaufende Wandung 20, die ihrerseits eine Mehrzahl von in Umfangsrichtung 24 gleichverteilten Durchtrittsschlitzen 21 aufweist. Die Wandung 20 stellt mithin voneinander beabstandete Laschen zur Verfügung, die ringförmig um die Nachfüllöffnung 13 verteilt angeordnet sind.

Der erste Stutzen 19 ist von einem zweiten Stutzen 22 unter Belassung eines radialen Abstandes umgeben. Dabei weist auch der zweite Stutzen 22 eine umlaufende Wandung mit einer Mehrzahl von in Umfangsrichtung 24 gleich verteilten Durchtrittsschlitzen 21 auf. Wie dies insbesondere die Darstellung nach Fig. 2 erkennen lässt, unterscheidet sich das Ausbildungsmuster der Durchtrittsschlitze 21 des ersten Stutzens 19 von dem des zweiten Stutzens 22. Dabei ist gemäß dem in Fig. 2 gezeigten Ausführungsbespiel konkret vorgeschlagen, dass ein Durchtrittsschlitz 21 des ersten Stutzens 19 in radialer Richtung von einem Wandabschnitt des zweiten Stutzens 22 begrenzt ist. Die Durchtrittsschlitze 21 von erstem Stutzen 19 und zweitem Stutzen 22 liegen mithin in radialer Richtung nicht direkt hintereinander. Es ist auf diese Weise eine Art Labyrinthführung gegeben, die dafür Sorge trägt, dass zwar insbesondere im Ladefall entstehendes Gas durch die Durchtrittsschlitze 21 und die Nachfüllöffnung 13 hindurch an die die Akkumulatorzelle umgebende Atmosphäre abgegeben werden kann, dass aber innerhalb des Zellengehäuses aufschwappender Elektrolyt zurückgehalten wird, indem sich Elektrolytschwappwellen an den Wandabschnitten der Stutzen 19 und 22 brechen. Ein ungewollter Elektrolytaustritt durch die Nachfüllöffnung 13 hindurch ist so wirkungsvoll unterbunden.

Um die Gefahr eines möglichen Elektrolytaustritts noch weiter zu minimieren, ist gemäß der in Fig. 2 gezeigten Ausführungsform ein dritter Stutzen 23 vorgesehen, der den Stutzen 22 unter Belassung eines radialen Abstandes umgibt. Dabei hat auch der dritte Stutzen 23 eine umlaufende Wandung mit einer Vielzahl von in Umfangsrichtung 24 gleich verteilt angeordneten Durchtrittsschlitzen 21.

Bezüglich der Stutzen 19, 22 und 23 ist eine Anordnung bevorzugt, wie in Fig. 2 dargestellt, wonach sich das Ausbildungsmuster von erstem und zweiten Stutzen sowie von zweitem und dritten Stutzen jeweils voneinander unterscheiden. Dabei ist das Ausbildungsmuster von erstem Stutzen 19 und drittem Stutzen 23 gleich. Es ergibt sich so für einen schwappenden Fluid eine maximale Weglänge durch die von der Stutzenanordnung bereitgestellte Labyrinthführung hindurch bis zur Nachfüllöffnung 13.

Die elektrische Verbindung zwischen den Elektrodenplattenpaaren und den jeweils zugehörigen Polen 8, 9, 10 und 11 ist bevorzugterweise aus einem hochleitfähigen Werkstoff gebildet oder weist zumindest Bereiche mit Einlagen aus einem hochleitfähigen Werkstoff auf. Auch hierdurch ist eine Minimierung des Innenwiderstands erreicht.

Eine Vielzahl von Akkumulatorzellen 1 gemäß Fig. 1 können zur Ausbildung einer Traktionsbatterie miteinander in Reihen und Spalten kombiniert und elektrisch miteinander verbunden werden. Die so miteinander kombinierten Akkumulatorzellen 1 sind innerhalb eines Batteriegehäuses angeordnet. Dabei erfolgt die Anordnung der Akkumulatorzellen 1 derart, dass die Akkumulatorzellen 1 reihen- und/oder spaltenweise unter Belassung eines Spaltraums beabstandet zueinander angeordnet sind. Es ist so die Möglichkeit geschaffen, dass zwischen den Akkumulatorzellen 1 ein Kühlstrom hindurchgeführt werden kann, was im bestimmungsgemäßen Betriebsfall zu einer Abkühlung der Akkumulatorzellen 1 führt.

Das zur Aufnahme der Akkumulatorzellen 1 vorgesehene Batteriegehäuse verfügt über einen Boden. Da die Akkumulatorzellen 1 aufgrund der verkürzten Ausgestaltung der Pole in Höhenrichtung 17 weniger hoch aufbauen als Akkumulatorzellen 1 nach Standardabmessungen, können Akkumulatorzellen 1 in einem dem Standard entsprechenden Batteriegehäuse angeordnet werden, und zwar derart, dass zwischen dem Boden des Batteriegehäuses und den Akkumulatorzellen 1 ein Verteilraum verbleibt. Dieser Verteilraum verbindet die einzelnen zwischen den Akkumulatorzellen 1 ausgebildeten Spalträume strömungstechnisch miteinander, was im Betriebsfall ein regelrechtes Umströmen der Akkumulatorzellen mit einem Kühlluftstrom ermöglicht.

### Bezugszeichen

- 1: Akkumulatorzelle
- 2: Zellengehäuse
- 3: Zellendeckel
- 4: negative Elektrodenplatte
- 5: positive Elektrodenplatte
- 6: Polbrücke
- 7: Polbrücke
- 8: Pol
- 9: Pol
- 10: Pol
- 11: Pol
- 12: Öffnung
- 13: Nachfüllöffnung
- 14: Einsatz
- 15: Klappe
- 16: Einlage
- 17: Höhenrichtung
- 18: Innenseite
- 19: Stutzen
- 20: Wandung
- 21: Durchtrittsschlitz
- 22: zweiter Stutzen
- 23: dritter Stutzen
- 24: Umfangsrichtung

## Patentansprüche

1. Traktionsbatterie mit einem Batteriegehäuse und einer Mehrzahl von darin in Reihen und Spalten angeordneten und miteinander elektrisch verschalteten Akkumulatorzellen, wobei eine Akkumulatorzelle (1) ein Zellengehäuse (2) und einen das Zellengehäuse (2) fluiddicht verschließenden Zellendeckel (3) aufweist, wobei das Batteriegehäuse standardisierte geometrische Abmessungen zur Aufnahme von HPzS-Akkumulatorzellen mit acht positiven Elektrodenplatten (5) sowie neun negativen Elektrodenplatten (4) aufweist, wobei innerhalb des Zellengehäuses (2) einander abwechselnd positive und negative Elektrodenplatten (4, 5) sowie ein die Elektrodenplatten umgebender Elektrolyt angeordnet sind, wobei die positiven und die negativen Elektrodenplatten (4, 5) jeweils an einen gemeinsamen und durch eine Öffnung (12) im Zellendeckel (3) hindurchgeführten Pol (8, 10) elektrisch angeschlossen sind und wobei der Zellendeckel (3) eine gasdurchlässig verschließbare Nachfüllöffnung (13) für Elektrolyt aufweist, **dadurch gekennzeichnet,**
- **dass** vier Pole (8, 9, 10, 11) vorgesehen sind, wobei die negativen und die positiven Elektrodenplatten jeweils an zwei Pole (8, 9; 10,11) angeschlossen sind,
- **dass** die Pole (8, 9, 10, 11) jeweils eine Einlage (16) aus Kupfer und/oder einer Kupferlegierung aufweisen und
- **dass** die Pole (8, 9, 10, 11) jeweils eine Erstreckung in Höhenrichtung (17) von weniger als 80 mm aufweisen, wobei der Zellendeckel (3) auf seiner dem Gehäuse (2) zugewandten Innenseite (18) einen die Nachfüllöffnung (13) ringförmig umgebenden Stutzen (19) mit einer umlaufenden Wandung (20) aufweist, die über eine Mehrzahl von in Umfangsrichtung (24) gleichverteilten Durchtrittsschlitzen (21) verfügt,
- wobei die Akkumulatorzellen HPzS-Akkumulatorzellen mit sieben positiven Elektrodenplatten (5) oder weniger sowie acht negativen Elektrodenplatten (4) oder weniger vorgesehen sind,
- wobei die Akkumulatorzellen (1) unter Belassung eines Spaltraums beabstandet zueinander angeordnet sind.

2. Traktionsbatterie nach Anspruch 1, **dadurch gekennzeichnet, dass** die Pole (8, 9, 10, 11) jeweils eine Erstreckung in Höhenrichtung (17) von weniger als 70 mm, vorzugsweise von weniger als 65 mm, noch mehr bevorzugt von weniger als 60 mm und am meisten bevorzugt von weniger als 55 mm aufweisen.

3. Traktionsbatterie nach Anspruch 1 oder 2, **dadurch gekennzeichnet, dass** der erste Stutzen (19) von einem zweiten Stutzen (22) unter Belassung eines radialen Abstandes umgeben ist, wobei der zweite Stutzen (22) eine umlaufende Wandung mit einer Mehrzahl von in Umfangsrichtung (24) gleichverteilten Durchtrittsschlitzen (21) aufweist.

4. Traktionsbatterie nach Anspruch 3, **dadurch gekennzeichnet, dass** sich das Ausbildungsmuster der Durchtrittsschlitze (21) von dem ersten und dem zweiten Stutzen (18, 22) unterscheidet.

5. Traktionsbatterie nach Anspruch 4, **dadurch gekennzeichnet, dass** der zweite Stutzen (22) von einem dritten Stutzen (23) unter Belassung eines radialen Abstandes umgeben ist, wobei der dritte Stutzen (23) eine umlaufende Wandung mit einer Vielzahl von in Umfangsrichtung (24) gleichverteilten Durchtrittsschlitzen (21) aufweist.

6. Traktionsbatterie nach Anspruch 5, **dadurch gekennzeichnet, dass** sich das Ausbildungsmuster der Durchtrittsschlitze (21) von dem zweiten und dem dritten Stutzen (22, 23) unterscheidet.

7. Traktionsbatterie nach einem der vorhergehenden Ansprüche, **dadurch gekennzeichnet, dass** die Poleinlage über 50 %, vorzugsweise über 60 %, noch mehr bevorzugt über 70 % der Polquerschnittsfläche einnimmt.

8. Traktionsbatterie nach einem der vorhergehenden Ansprüche, **dadurch gekennzeichnet, dass** die elektrische Verbindung zwischen den Elektrodenplattenpaaren und den jeweils zugehörigen Polen (8, 9, 10, 11) aus einem hochleitfähigen Werkstoff gebildet ist oder Bereiche mit Einlagen aus einem hochleitfähigen Werkstoff aufweist.

9. Traktionsbatterie nach Anspruch 8, **dadurch gekennzeichnet, dass** der hochleitfähige Werkstoff Kupfer und/oder eine Kupferlegierung aufweist.

10. Traktionsbatterie nach einem der vorgenannten Ansprüche, **dadurch gekennzeichnet, dass** das Batteriegehäuse einen Boden aufweist, wobei zwischen den vom Batteriegehäuse aufgenommenen Akkumulatorzellen (1) und dem Boden ein die zwischen den Akkumulatorzellen ausgebildeten Spalträume strömungstechnisch miteinander verbindender Verteilraum vorgesehen ist.

11. Traktionsbatterie nach Anspruch 10, **dadurch gekennzeichnet, dass** die Spalträume strömungstechnisch an ein System zur Erzeugung eines Kühlmittelstroms angeschlossen sind.

12. Traktionsbatterie nach Anspruch 11, **dadurch gekennzeichnet, dass** als Kühlmittel Umgebungsluft dient.

## Claims

1. Traction battery comprising a battery housing and a plurality of accumulator cells arranged therein in rows and columns and electrically interconnected with each other, wherein an accumulator cell (1) has a cell case (2) and a cell cover (3) sealing the cell case (2) in a fluid-tight manner, wherein the battery housing has standardized geometric dimensions for accommodating HPzS accumulator cells with eight positive electrode plates (5) and nine negative electrode plates (4), wherein alternating positive and negative electrode plates (4, 5) as well as an electrolyte surrounding the electrode plates are arranged inside the cell case (2), wherein the positive and negative electrode plates (4, 5) are each electrically connected to a common terminal (8, 10) passed through an opening (12) in the cell cover (3), and wherein the cell cover (3) has a refill opening (13) for electrolyte that can be sealed in a gas-permeable manner, **characterized in that**
- four terminals (8, 9, 10, 11) are provided, wherein the negative and the positive electrode plates are each connected to two terminals (8, 9; 10, 11),
- the terminals (8, 9, 10, 11) each have an insert (16) made of copper and/or a copper alloy and
- the terminals (8, 9, 10, 11) each have a vertical extent (17) of less than 80 mm, wherein the cell over (3) comprises, on its inner side facing the case (2), a neck (19) annularly surrounding the refill opening (13) and with a circumferential wall (20) that includes a plurality of passage slots (21) equally distributed in the circumferential direction,
- wherein the accumulator cells are provided as HPzS accumulator cells with seven positive electrode plates (5) or less and with eight negative electrode plates (4) or less,
- wherein the accumulator cells (1) are spaced from each other while leaving a gap.

2. Traction battery according to claim 1, **characterized in that** the terminals (8, 9, 10, 11) each have a vertical extent (17) of less than 70 mm, preferably less than 65 mm, more preferably less than 60 mm, and most preferably of less than 55 mm.

3. Traction battery according to claim 1 or 2, **characterized in that** the first neck (19) is surrounded by a second neck (22) while leaving a radial distance, wherein the second neck (22) has a circumferential wall with a plurality of passage slots (21) equally distributed in the circumferential direction (24).

4. Traction battery according to claim 3, **characterized in that** the configuration pattern of the passage slots (21) is different from the first and the second neck (18, 22).

5. Traction battery according to claim 4, **characterized in that** the second neck (22) is surrounded by a third neck (23) while leaving a radial distance, wherein the third neck (23) has a circumferential wall with a plurality of passage slots (21) equally distributed in the circumferential direction (24).

6. Traction battery according to claim 5, **characterized in that** the configuration pattern of the passage slots (21) is different from the first and the second neck (22, 23).

7. Traction battery according to any one of the preceding claims, **characterized in that** the terminal insert occupies more than 50 %, preferably more than 60 %, even more preferably more than 70 % of the terminal cross-sectional area.

8. Traction battery according to any one of the preceding claims, **characterized in that** the electrical connection between the electrode plate pairs and the respective associated terminals (8, 9, 10, 11) is made from a highly conductive material or includes areas with inserts made from a highly conductive material.

9. Traction battery according to claim 8, **characterized in that** the highly conductive material comprises copper and/or a copper alloy.

10. Traction battery according to any one of the preceding claims, **characterized in that** the battery housing has a bottom, wherein between the accumulator cells (1) accommodated by the battery housing and the bottom, a distribution space is provided, which fluidically connects the gap spaces formed between the accumulator cells with each other.

11. Traction battery according to claim 10, **characterized in that** the gap spaces are fluidically connected to a system for generating a coolant flow.

12. Traction battery according to claim 11, **characterized in that** ambient air serves as a coolant.

## Revendications

1. Batterie de traction comprenant un boîtier de batterie et une pluralité de cellules d'accumulateur disposées à l'intérieur du boîtier de batterie en rangées et en colonnes et interconnectées électriquement les unes avec les autres, dans laquelle une cellule d'accumulateur (1) comporte un boîtier de cellule (2) et un couvercle de cellule (3) fermant le boîtier de cellule (2) de manière étanche aux fluides, dans laquelle le boîtier de batterie présente des dimensions géométriques normalisées pour recevoir des cellules d'accumulateur HPzS comportant huit plaques d'électrodes positives (5) et neuf plaques d'électrodes négatives (4), à l'intérieur du boîtier de cellule (2) étant disposées en alternance des plaques d'électrodes positives et négatives (4, 5) ainsi qu'un électrolyte entourant les plaques d'électrodes, dans laquelle les plaques d'électrodes positives et négatives (4, 5) sont chacune reliées électriquement à une borne commune (8, 10) passant à travers une ouverture (12) dans le couvercle de cellule (3), et dans laquelle le couvercle de cellule (3) comporte une ouverture de remplissage (13) pour l'électrolyte pouvant être obturée de manière perméable aux gaz, **caractérisée en ce que**
- quatre bornes (8, 9, 10, 11) sont prévues, les plaques d'électrodes négatives et positives étant chacune reliées à deux bornes (8, 9; 10, 11),
- les bornes (8, 9, 10, 11) comportent chacune un insert (16) en cuivre et/ou en alliage de cuivre et
- les bornes (8, 9, 10, 11) présentant chacune une extension dans le sens de la hauteur (17) inférieure à 80 mm, le couvercle de cellule (3) comportant, sur sa face interne tournée vers le boîtier (2), un bec (19) entourant de manière annulaire l'ouverture de remplissage (13) et comportant une paroi circonférentielle (20) qui comprend une pluralité de fentes de passage (21) réparties de manière uniforme dans la direction circonférentielle,
- dans laquelle les cellules d'accumulateur sont réalisées sous forme de cellules d'accumulateur HPzS comportant sept plaques d'électrodes positives (5) ou moins et huit plaques d'électrodes négatives (4) ou moins,
- dans laquelle les cellules d'accumulateur (1) sont espacées les unes des autres en laissant un espace.

2. Batterie de traction selon la revendication 1, **caractérisée en ce que** les bornes (8, 9, 10, 11) présentent chacune une extension dans le sens de la hauteur (17) inférieure à 70 mm, de préférence inférieure à 65 mm, mieux encore inférieure à 60 mm et, de manière encore plus préférable, inférieure à 55 mm.

3. Batterie de traction selon la revendication 1 ou 2, **caractérisée en ce que** le premier bec (19) est entouré par un deuxième bec (22) en laissant un écart radial, le deuxième bec (22) comportant une paroi circonférentielle munie d'une pluralité de fentes de passage (21) réparties de manière uniforme dans la direction circonférentielle (24).

4. Batterie de traction selon la revendication 3, **caractérisée en ce que** la configuration des fentes de passage (21) diffère des premier et deuxième becs (18, 22).

5. Batterie de traction selon la revendication 4, **caractérisée en ce que** le deuxième bec (22) est entouré par un troisième bec (23) en laissant un écart radial, le troisième bec (23) comportant une paroi circonférentielle munie d'une pluralité de fentes de passage (21) réparties de manière uniforme dans la direction circonférentielle (24).

6. Batterie de traction selon la revendication 5, **caractérisée en ce que** la configuration des fentes de passage (21) diffère des premier et deuxième becs (22, 23).

7. Batterie de traction selon l'une quelconque des revendications précédentes, **caractérisée en ce que** l'insert de borne occupe plus de 50 %, de préférence plus de 60 %, et encore plus préférablement plus de 70 % de la section transversale de la borne.

8. Batterie de traction selon l'une quelconque des revendications précédentes, **caractérisée en ce que** la connexion électrique entre les paires de plaques d'électrodes et les bornes respectives associées (8, 9, 10, 11) est réalisée à partir d'un matériau hautement conducteur ou comprend des zones comportant des inserts en matériau hautement conducteur.

9. Batterie de traction selon la revendication 8, **caractérisée en ce que** le matériau hautement conducteur comprend du cuivre et/ou un alliage de cuivre.

10. Batterie de traction selon l'une quelconque des revendications précédentes, **caractérisée en ce que** le boîtier de batterie comporte un fond, un espace de distribution étant prévu entre les cellules d'accumulateur (1) logées dans le boîtier de batterie et le fond, lequel espace de distribution relie entre eux les espaces formés entre les cellules d'accumulateur de manière fluidique.

11. Batterie de traction selon la revendication 10, **caractérisée en ce que** les espaces sont reliés de manière fluidique à un système destiné à générer un écoulement de fluide de refroidissement.

12. Batterie de traction selon la revendication 11, **caractérisée en ce que** l'air ambiant sert de fluide de refroidissement.
